# EUROPEAN PATENT APPLICATION

(11) **EP 4 507 121 A1**
(43) Date of publication of application: **12.02.2025**
(21) Application number: 23838814.4
(22) Date of filing: 05.07.2023
(51) Int. Cl.: H01Q 1/24, H01Q 1/36

(54) **ELECTRONIC DEVICE**

(30) Priority: 13.07.2022 CN 202210824323
(71) Applicant: Huawei Technologies Co., Ltd., Shenzhen, Guangdong 518129 (CN)
(72) Inventor: LI, Kun, Shenzhen, Guangdong 518129 (CN); YE, Mao, Shenzhen, Guangdong 518129 (CN); LEI, Jianwen, Shenzhen, Guangdong 518129 (CN); WANG, Yu, Shenzhen, Guangdong 518129 (CN); WANG, Shan, Shenzhen, Guangdong 518129 (CN); HE, Zhifeng, Shenzhen, Guangdong 518129 (CN); WEI, Gangwei, Shenzhen, Guangdong 518129 (CN)
(74) Representative: Pfenning, Meinig & Partner mbB
(86) International application number: PCT/CN2023/105836
(87) International publication number: WO 2024/012322

(57) **Abstract**

This application provides an electronic device, including a first antenna, a second antenna, and a switching module. The switching module is electrically connected to at least one of the first antenna and the second antenna, to enable the at least one of the first antenna and the second antenna to be coupled to a satellite communication system, to enable the first antenna and the second antenna to be combined into a third antenna. According to the electronic device provided in this application, an antenna connected to the switching module may be selectively connected to a cellular communication system or the satellite communication system through the switching module, to implement antenna switching between the two systems, implement reconfiguration by using an existing antenna in the electronic device, and enable the electronic device to implement both cellular communication and satellite communication without occupying additional space in the electronic device.

## Description

This application claims priority to Chinese Patent Application No. 202210824323.7, filed with the China National Intellectual Property Administration on July 13, 2022 and entitled "ELECTRONIC DEVICE", which is incorporated herein by reference in its entirety.

### TECHNICAL FIELD

This application relates to the field of communication technologies, and in particular, to an electronic device.

### BACKGROUND

With continuous development of satellite communication technologies, satellite communication will be an important part of a future 6G communication technology. However, different from a conventional cellular communication technology, the satellite communication has different requirements on antennas. How to implement coexistence of a cellular communication system and a satellite communication system on a very small mobile phone terminal becomes a great problem. Especially, as the mobile phone terminal is gradually miniaturized and thinned currently, it is more difficult to implement both cellular communication and a design of a circularly polarized and high-gain satellite communication antenna.

### SUMMARY

An objective of this application is to provide an electronic device, to resolve a problem in the conventional technology that it is difficult to implement both cellular communication and a design of a circularly polarized and high-gain satellite communication antenna in limited space in a mobile phone.

This application provides an electronic device, including:
a first antenna;
a second antenna; and
a switching module, where the switching module is electrically connected to at least one of the first antenna and the second antenna, to enable the first antenna and the second antenna to be coupled to a satellite communication system, to enable the first antenna and the second antenna to be combined into a third antenna.

According to the electronic device provided in this application, an antenna connected to the switching module may be selectively connected to a cellular communication system or the satellite communication system through the switching module, to implement antenna switching between the two systems, implement reconfiguration by using an existing antenna in the electronic device, and enable the electronic device to implement both cellular communication and satellite communication without occupying additional space in the electronic device.

In a possible design, the electronic device further includes a phase shift module, and the phase shift module is coupled to at least one of the first antenna and the second antenna.

The phase shift module may adjust an antenna phase, so that a phase difference between two antennas can satisfy a requirement. In this embodiment, the phase shift module may be connected to only one of the antennas, and the phase difference between the two antennas can be changed by adjusting one antenna phase.

In a possible design, the first antenna and the second antenna are cellular communication antennas operating in a cellular communication frequency band, and the switching module is electrically connected to the first antenna and the second antenna. Therefore, an existing cellular communication antenna in the electronic device may be reconfigured, and an antenna dedicated to satellite communication does not need to be separately disposed, to avoid occupying additional space in the electronic device.

In a possible design, the first antenna and the second antenna are both multiple-input multiple-output antennas.

In a possible design, the multiple-input multiple-output antenna includes at least a primary receive antenna, a diversity receive antenna, a primary receive multiple-input multiple-output antenna, and a diversity receive multiple-input multiple-output antenna. The primary receive antenna and the diversity receive antenna form a primary channel for receiving a cellular communication signal, and the primary receive multiple-input multiple-output antenna and the diversity receive multiple-input multiple-output antenna form a secondary channel for receiving a cellular communication signal. The switching module is separately connected to the primary receive multiple-input multiple-output antenna and the diversity receive multiple-input multiple-output antenna, and is configured to enable the primary receive multiple-input multiple-output antenna and the diversity receive multiple-input multiple-output antenna to switch between the cellular communication system and the satellite communication system.

In this way, the switching module is connected to a PRX MIMO antenna and a DRX MIMO antenna, so that impact on a PRX antenna and a DRX antenna on the primary channel can be avoided. In other words, not only the cellular communication antenna can be reconfigured and satellite communication can be implemented, but also communication effect in a cellular communication mode can be ensured.

In a possible design, one of the first antenna and the second antenna is a cellular communication antenna operating in a cellular communication frequency band, and the other of the first antenna and the second antenna is a satellite communication antenna operating in a satellite communication frequency band. The satellite communication antenna is coupled to the satellite communication system; the phase shift module is connected to the satellite communication antenna; and the switching module is connected to the cellular communication antenna.

The satellite communication antenna may be designed based on parameters and features such as a polarization direction and an operating frequency band of one of the cellular communication antennas, to ensure that the electronic device can obtain an elliptically polarized satellite communication antenna through reconfiguration. The separately designed satellite communication antenna may be connected to the satellite communication system, and does not need to be switched, and only a matched cellular communication antenna needs to be switched by using the switching module.

In a possible design, the cellular communication antenna configured to match the satellite communication antenna is a diversity receive multiple-input multiple-output antenna. The PRX MIMO antenna is a main link for receiving the cellular communication signal in the secondary channel. The DRX MIMO antenna is mainly configured to cancel impact of fast fading on signal receiving. Therefore, reconfiguring the DRX MIMO antenna can reduce impact on performance of the PRX MIMO antenna, to ensure cellular communication effect.

In a possible design, the switching module includes a switch assembly, and the switch assembly includes a first terminal, a second terminal, a third terminal, and a switch. The first terminal is configured to connect to the cellular communication antenna, the second terminal is configured to connect to the cellular communication system, and the third terminal is configured to connect to the satellite communication system. One end of the switch is connected to the first terminal, and the other end of the switch is selectively connected to one of the second terminal and the third terminal.

When operating in a cellular communication mode is required, the switch may be connected to the second terminal, so that the antenna can be connected to the cellular communication system, to implement cellular communication. When operating in a satellite communication mode is required, the switch may be connected to the third terminal, so that the antenna may be connected to the satellite communication system, to implement satellite communication.

In a possible design, the switching module further includes a frequency division circuit, and the frequency division circuit is configured to connect to cellular communication antennas that include at least two operating frequency bands. The frequency division circuit is configured to connect a cellular communication antenna operating in a first frequency band to the cellular communication system; and the frequency division circuit is further configured to connect a cellular communication antenna operating in a second frequency band to the satellite communication system.

The frequency division circuit may connect the cellular communication antenna operating in the first frequency band to the cellular communication system, to perform cellular communication, and connect the cellular communication antenna operating in the second frequency band to the satellite communication system, to perform satellite communication after reconfiguration. Therefore, cellular communication and satellite communication may operate simultaneously by using the frequency division circuit.

In a possible design, the phase shift module includes a phase shifter or a phase shift circuit.

In a possible design, the electronic device includes a ground plane, the ground plane includes a long side and a short side, the first antenna is disposed on the long side, and the second antenna is disposed on the short side.

The first antenna and the second antenna may be reconfigured into circularly polarized satellite communication antennas. A polarization direction of the first antenna may be parallel to an extension direction of the long side, and a polarization direction of the second antenna may be parallel to an extension direction of the short side. Therefore, the polarization directions of the first antenna and the second antenna may be orthogonal, and the first antenna and the second antenna may be combined into an elliptically polarized satellite communication antenna through reconfiguration.

In a possible design, a choke structure is disposed on the long side.

The choke structure is disposed on the long side, and the choke structure may reflect a current transferred from the first antenna, to suppress current dispersion. In other words, the choke structure may enable currents to be more concentrated at a location of the antenna, improve circular polarization characteristics of the first antenna and the second antenna, and improve an antenna gain.

In a possible design, a distance between the choke structure and the short side on which the second antenna is located is equal to a length of the short side.

The distance between the choke structure and the short side is equal to the length of the short side, so that a square area can be formed between the choke structure and the short side, and the currents can form current intensity points at two ends of the short side and two ends of the choke structure. In other words, the currents can be more concentrated at locations of the first antenna and the second antenna, so that a circular polarization characteristic of the elliptically polarized satellite communication antenna formed by reconfiguring the first antenna and the second antenna is improved, and an antenna gain is improved.

In a possible design, the choke structure is a metal stub. The metal stub is disposed on a path where the currents are dispersed along the long side of the ground plane, to reflect the currents.

In a possible design, the third antenna is an elliptically polarized satellite communication antenna.

It should be understood that the foregoing general descriptions and the following detailed descriptions are merely used as an example, and should not limit this application.

### BRIEF DESCRIPTION OF DRAWINGS

FIG. 1 is a diagram of a structure of an electronic device according to an embodiment of this application;
FIG. 2 is a diagram of a structure of an antenna system according to this application;
FIG. 3 is a diagram of another structure of an antenna system according to this application;
FIG. 4 is a diagram of still another structure of an antenna system according to this application;
FIG. 5 is a diagram of yet another structure of an antenna system according to this application;
FIG. 6 is an efficiency curve diagram of an elliptically polarized satellite communication antenna;
FIG. 7 is a diagram of radiation of an elliptically polarized satellite communication antenna in a common state of an electronic device according to this application;
FIG. 8 is a radiation pattern of an elliptically polarized satellite communication antenna in a common state of an electronic device according to this application;
FIG. 9 is a diagram of a structure of a switch assembly;
FIG. 10 is a state diagram in which a first antenna and a second antenna are disposed on a ground plane;
FIG. 11 is a diagram of different relative locations of a first antenna and a second antenna;
FIG. 12 shows radiation patterns that are of an elliptically polarized satellite communication antenna and that are obtained when the first antenna and the second antenna in FIG. 11 are at different relative positions;
FIG. 13 is a diagram of a structure in which a choke structure id disposed on a ground plane;
FIG. 14 is a diagram of distribution of currents on a ground plane on which no choke structure is disposed; and
FIG. 15 is a diagram of distribution of currents on a ground plane on which a choke structure is disposed.

### Reference numerals:

100: electronic device;
101: screen;
102: ground plane;
102a: long side;
102b: short side;
103: choke structure;
1: elliptically polarized satellite communication antenna;
2: cellular communication antenna;
3: satellite communication antenna;
4: switching module;
41: switch assembly;
411: first terminal;
412: second terminal;
413: third terminal;
414: switch;
5: phase shift module;
6: cellular communication system;
7: satellite communication system;
8: first antenna; and
9: second antenna.

The accompanying drawings herein are incorporated into this specification and constitute a part of this specification, show embodiments in accordance with this application, and are used together with this specification to explain the principle of this application.

### DESCRIPTION OF EMBODIMENTS

To better understand technical solutions of this application, the following describes embodiments of this application in detail with reference to the accompanying drawings. It should be understood that the specific embodiments described herein are merely used to explain this application but are not intended to limit this application.

In the descriptions of this application, unless otherwise explicitly specified or defined, the terms "first" and "second" are merely used for a purpose of description, and shall not be understood as an indication or implication of relative importance. Unless otherwise specified or explained, the term "a plurality of" refers to two or more. The terms "connection", "fixed", and the like should be understood in a broad sense. For example, the "connection" may be a fixed connection, or may be a detachable connection, an integrated connection, or an electrical connection; or the "connection" may be a direct connection, or an indirect connection through an intermediary. A person of ordinary skill in the art may understand specific meanings of the foregoing terms in this application based on specific situations.

In the cellular communication technology, signals are transmitted through a ground base station, and in the satellite communication technology, signals are transmitted through a satellite. For cellular communication, a base station is generally disposed in a place where most people live, for example, a city or a village. In these places, a normal communication requirement in life may be satisfied by using cellular communication, and therefore, satellite communication may not be used. Antennas configured to implement cellular communication usually use a form of linear polarization. For example, the base station uses +/-45° linear polarization.

However, when people travel or work in some remote places, for example, in a remote mountainous area, a jungle, or a plateau, where the base station is difficult to deploy or the base station is far away, or in a complex climate and electromagnetic environment, such a single linearly polarized antenna cannot satisfy requirements such as satellite communication, space detection, and radar tracking and positioning on a target. In this case, satellite communication may be used to satisfy a communication requirement.

The existing cellular communication and satellite communication are usually implemented by using two different devices. For example, generally, a mobile phone commonly used in daily life is provided with only a cellular communication antenna, to implement cellular communication. For another example, a satellite phone is a dedicated device for communication through a satellite, and is specially used in an outdoor remote area. Generally, the satellite phone is provided with only a satellite communication antenna 3. A structure of the satellite phone is greatly different from that of a common smartphone, and is generally not applicable to ordinary urban life. However, a common mobile phone that can implement cellular communication cannot be normally used in the remote area. Therefore, when a user needs to go to the outdoor remote area, a device having a cellular communication function and a device having a satellite communication function are usually carried. The two devices are carried at the same time and need to be switched for use. This causes great inconvenience and burden to the user.

Therefore, it is necessary to study a device that can implement both cellular communication and satellite communication. However, to achieve this objective, it is generally contemplated to dispose both a cellular communication antenna and a satellite communication antenna in one device. However, if both the cellular communication antenna and the satellite communication antenna are disposed in one device, a volume of the device becomes large, especially for a common mobile phone. A trend of miniaturization and thinness is increasingly pursued and space inside a mobile phone is increasingly small. Therefore, it is more difficult to dispose both the cellular communication antenna and the satellite communication antenna. In other words, it is difficult for an existing mobile phone to simultaneously implement miniaturization and thinness and implement a design of a circularly polarized and high-gain satellite communication antenna.

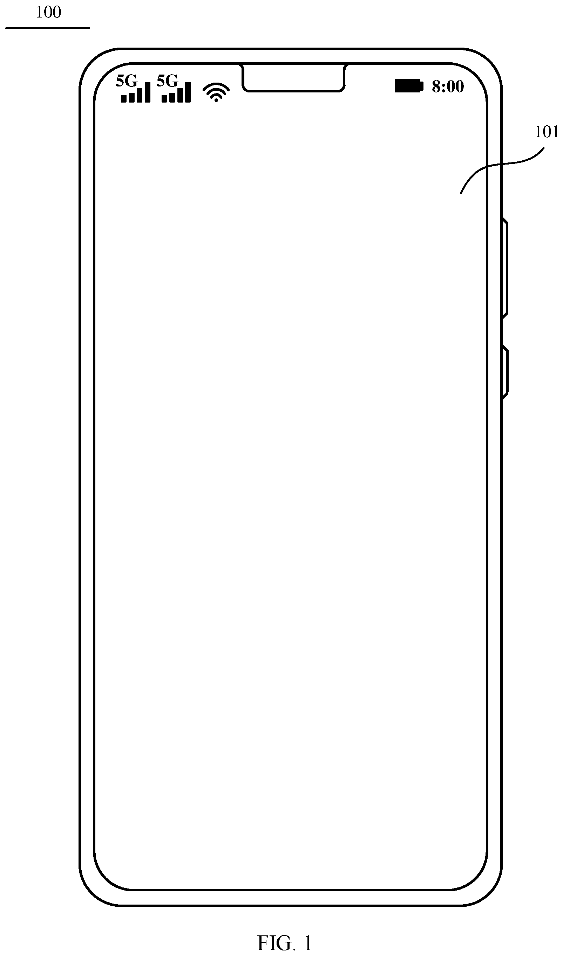

As shown in FIG. 1, an embodiment of this application provides an electronic device 100. The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 100 is not limited in this embodiment of this application.

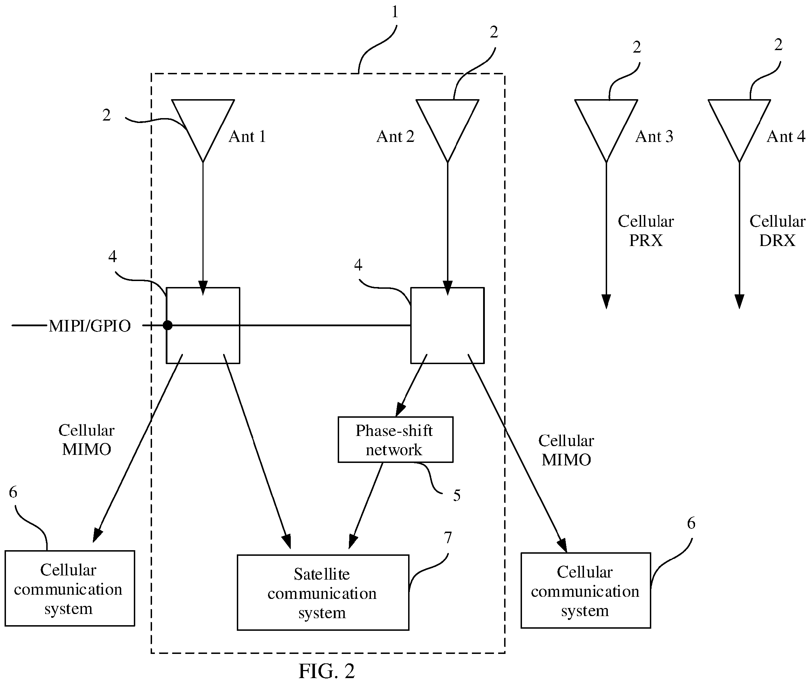

As shown in FIG. 2 to FIG. 4, an antenna system is disposed in the electronic device 100. The antenna system includes a first antenna, a second antenna, and a switching module 4. The switching module 4 is electrically connected to at least one of the first antenna and the second antenna, to enable the first antenna and the second antenna to be coupled to a satellite communication system 7, to enable the first antenna and the second antenna to be combined into a third antenna. In this embodiment, the third antenna is an elliptically polarized satellite communication antenna 1.

In the electronic device 100, there are generally a plurality of signal receive links, and each signal receive link corresponds to one antenna. The antenna is generally a single linearly polarized antenna, for example, a horizontally polarized antenna or a vertically polarized antenna. Polarization directions of the antennas may be the same, or may be partially different. For example, both the first antenna and the second antenna are horizontally polarized antennas, or both are vertically polarized antennas, or some antennas are horizontally polarized antennas, and the other antennas are vertically polarized antennas. There may be a plurality of first antennas and a plurality of second antennas. When linearly polarized wave components of the first antenna and the second antenna are orthogonal, the switching module 4 may be configured to connect to at least one of the first antenna and the second antenna, to enable the first antenna and the second antenna to be coupled to the satellite communication system 7 to implement satellite communication. After the first antenna and the second antenna that have the linearly polarized wave orthogonal components are coupled, an elliptically polarized antenna may be formed in a case in which a requirement of a phase difference is satisfied. In this way, circular polarization and a high gain of the satellite communication antenna are implemented.

Therefore, in an existing electronic device that uses cellular communication, the switching module 4 may selectively couple an antenna connected to the switching module 4 to a cellular communication system 6 or the satellite communication system 7, to implement antenna switching between the two systems, implement reconfiguration by using an existing antenna in the electronic device 100, and enable the electronic device 100 to implement both cellular communication and satellite communication without occupying additional space in the electronic device 100.

It should be noted that the cellular communication system 6 and the satellite communication system 7 are separately integrated in a chip, and the chip has a port for connecting to the switching module 4, so that the switching module 4 may control the antenna to be connected to the cellular communication system 6 or the satellite communication system 7. Frequency bands that can be satisfied in the cellular communication system 6 are an uplink frequency band of 1920 MHz to 1980 MHz and a downlink frequency band of 2110 MHz to 2170 MHz; and frequency bands that can be satisfied in the satellite communication system 7 are an uplink frequency band of 1980 MHz to 2010 MHz and a downlink frequency band of 2170 MHz to 2200 MHz. Certainly, with development of communication technologies, the cellular communication system 6 and the satellite communication system 7 may also support another communication frequency band in the future. This is not limited in embodiments.

When the electronic device 100 is used in an area covered by a base station, the switching module 4 connects the antenna connected to the switching module 4 to the cellular communication system 6, to implement cellular communication of the electronic device 100. When the electronic device 100 is used in an area outside a coverage area of the base station, the switching module 4 connects an antenna connected to the switching module 4 to the satellite communication system 7, to implement satellite communication of the electronic device 100.

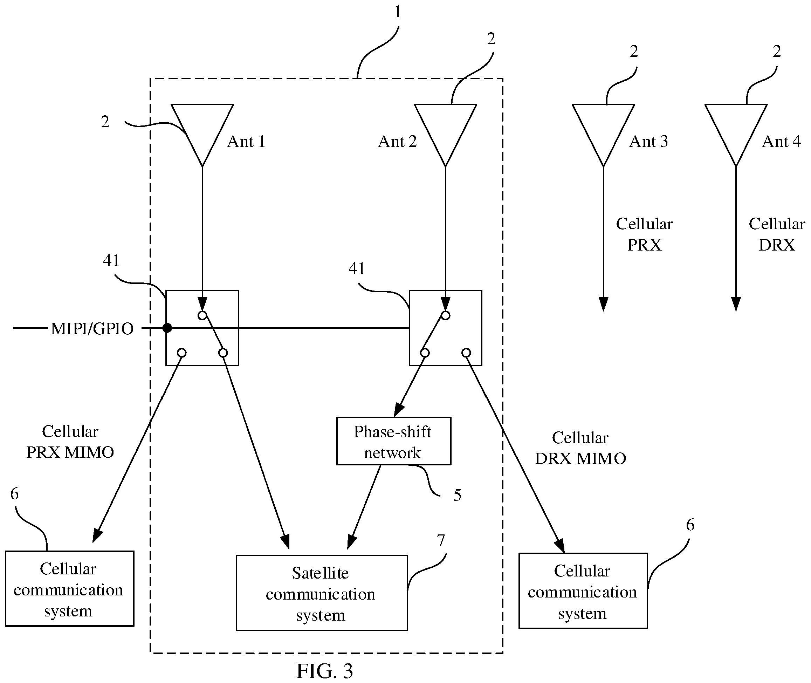

In a specific implementation, as shown in FIG. 2 and FIG. 3, the electronic device 100 further includes a phase shift module 5, and the phase shift module 5 is coupled to at least one of the first antenna and the second antenna. It may be understood that, when two linearly polarized waves need to be combined into a circularly polarized wave, a specific phase difference needs to be satisfied between the two antennas. The phase shift module 5 may adjust an antenna phase, so that the phase difference between the two antennas can satisfy a requirement. In this embodiment, the phase shift module 5 may be connected to only one of the antennas, and the phase difference between the two antennas can be changed by adjusting one antenna phase.

Specifically, the phase shift module 5 may be a phase shifter or a phase shift circuit. The phase shift circuit may be configured to implement a phase shift function and a phase compensation function, or the phase shift circuit is only configured to implement a phase shift function, and the phase shift circuit may be specifically integrated on a circuit board.

It should be noted that there is a specific distance between the antenna and the cellular communication system 6 or the satellite communication system 7. Many components such as a transmission line and a radio frequency front end may be disposed within the distance. In a process of transferring a signal from the antenna to the satellite communication system 7, a phase changes to a specific extent. If a phase difference between two antennas connected to the satellite communication system 7 can satisfy a requirement for obtaining a circularly polarized antenna through combination, the phase shift module 5 may not be added to change the phase.

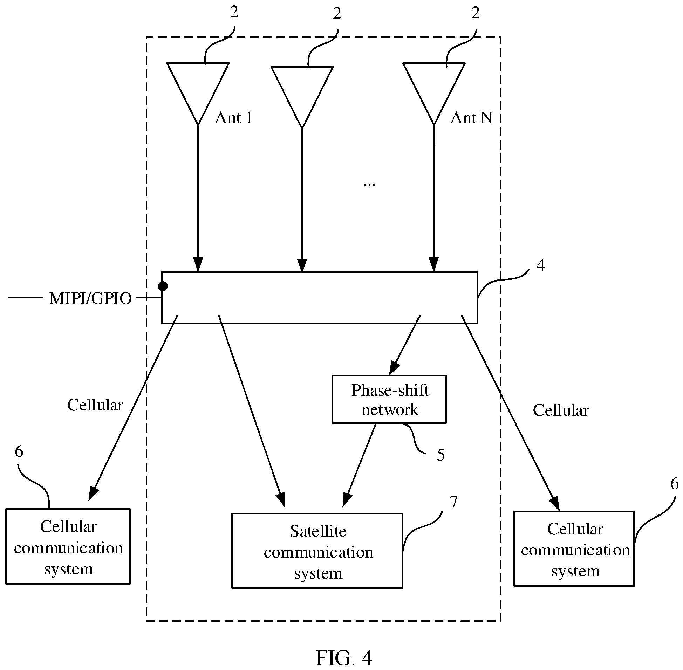

As shown in FIG. 4, in the electronic device 100, one elliptically polarized satellite communication antenna 1 may alternatively be obtained by reconfiguring two antennas in a plurality of existing antennas, and two elliptically polarized satellite communication antennas 1 may also be obtained by reconfiguring four antennas in the plurality of existing antennas. In other words, one elliptically polarized satellite communication antenna 1 may be obtained by reconfiguring two of the four antennas, and another elliptically polarized satellite communication antenna 1 may be obtained by reconfiguring the other two antennas. In this way, a dual-satellite communication function is implemented, and better satellite communication effect is achieved.

In a specific implementation, as shown in FIG. 2 to FIG. 5, the first antenna and the second antenna are cellular communication antennas 2 working in a cellular communication frequency band, and the switching module 4 is electrically connected to the first antenna and the second antenna, and is configured to couple the first antenna and the second antenna to the satellite communication system 7, so that the first antenna and the second antenna are combined into the elliptically polarized satellite communication antenna 1. In an existing common electronic device 100 that has a communication function, for example, a mobile phone, generally, only the cellular communication antenna 2 is disposed. In this embodiment, the existing cellular communication antenna 2 in the electronic device 100 may be reconfigured. Specifically, the two cellular communication antennas 2 may be respectively connected to one switching module 4, and each switching module 4 can switch the corresponding cellular communication antenna 2 between the cellular communication system 6 and the satellite communication system 7. When cellular communication is required, the switching module 4 may separately connect the corresponding cellular communication antennas 2 to the cellular communication system 6; and when satellite communication is required, the switching module 4 may separately connect the corresponding cellular communication antennas 2 to the satellite communication system 7, so that the two cellular communication antennas 2 form the elliptically polarized satellite communication antenna 1, to implement satellite communication. An instruction used to switch between cellular communication and satellite communication may be sent by a control module in the electronic device 100. Specifically, automatic determining and switching may be performed based on strength of a received or sent signal, or may be implemented through a manual operation. This is not specifically limited in this embodiment.

Specifically, to improve a download rate of a low-frequency network, a large throughput may be obtained by configuring MIMO (multiple-input multiple-output, multiple-input multiple-output). A MIMO function means to that a plurality of transmit antennas and a plurality of receive antennas are separately used to make full use of space resources. Multiple-transmit multiple-receive is implemented by using the first antenna and the second antenna. In this way, a system channel capacity can be multiplied without increasing spectrum resources and antenna transmit power. In this embodiment, as shown in FIG. 2, a plurality of cellular communication antennas 2 are multiple-input multiple-output antennas, and any two antennas that satisfy a condition in the multiple-input multiple-output antennas may be reconfigured.

Preferably, as shown in FIG. 3, in a case in which MIMO is configured, the plurality of cellular communication antennas 2 at least include a primary receive (primary receive, PRX) antenna, a diversity receive (diversity receive, DRX) antenna, a primary receive multiple-input multiple-output (PRX MIMO) antenna, and a diversity receive multiple-input multiple-output (DRX MIMO) antenna. The PRX antenna and the DRX antenna form a primary channel for receiving a cellular communication signal, and the PRX MIMO antenna and the DRX MIMO antenna form a secondary channel for receiving a cellular communication signal.

In a cellular communication mode, links on which the PRX antenna and the DRX antenna are located are the primary channel for receiving the cellular communication signal. In other words, the link on which the PRX antenna is located and the link on which the DRX antenna is located are preferentially used in cellular communication, and the two links can satisfy most use requirements. The primary channel and the secondary channel are used together only in a few cases, that is, the PRX MIMO antenna and the DRX MIMO antenna are used for cellular communication only in a few cases.

However, if the PRX antenna and the DRX antenna on the primary channel are reconfigured, the PRX antenna and the DRX antenna need to be connected to the switching module 4. The switching module 4 increases antenna losses, and causes performance attenuation of the PRX antenna and the DRX antenna, which is unfavorable to cellular communication.

Therefore, in this embodiment, as shown in FIG. 3, the switching module (a switch assembly 41 is shown as an example in FIG. 3) is separately connected to the PRX MIMO antenna and the DRX MIMO antenna, and is configured to enable the PRX MIMO antenna and the DRX MIMO antenna to switch between the cellular communication system 6 and the satellite communication system 7. In this way, the switch assembly 41 is connected to the PRX MIMO antenna and the DRX MIMO antenna, so that impact on the PRX antenna and the DRX antenna on the primary channel can be avoided. In other words, not only the cellular communication antenna 2 can be reconfigured and satellite communication can be implemented, but also communication effect in the cellular communication mode can be ensured.

In addition, polarization directions of the antennas of the electronic device 100 may be the same, or may be different, and operating frequency bands of the antennas may also be different. Consequently, any two antennas cannot satisfy a reconfiguration condition. For example, two antennas with a same polarization direction cannot be reconfigured, or two antennas with different operating frequency bands cannot be reconfigured.

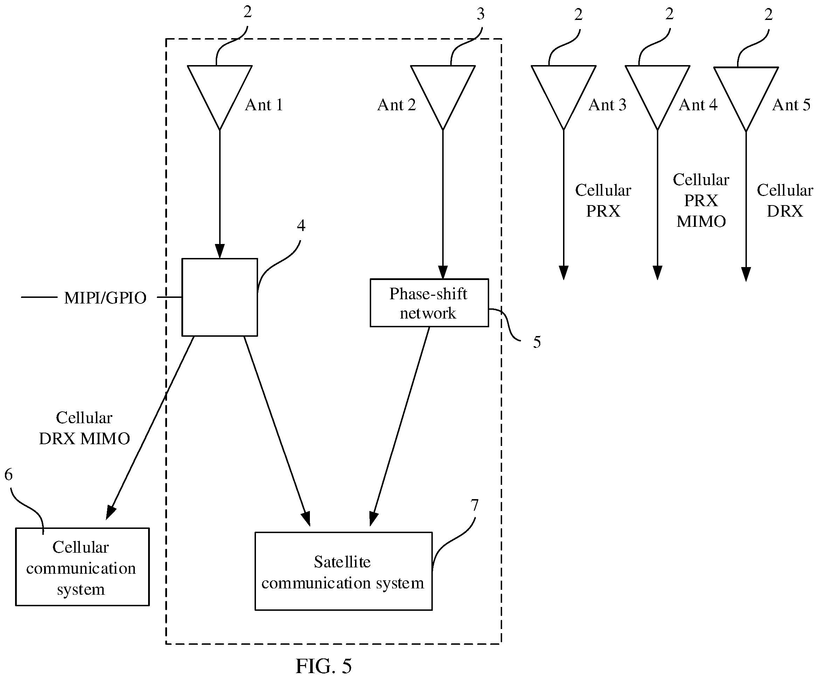

Therefore, in this embodiment, as shown in FIG. 5, one of the first antenna and the second antenna is the cellular communication antenna 2 operating in a cellular communication frequency band, and the other of the first antenna and the second antenna is a satellite communication antenna 3 operating in a satellite communication frequency band. The satellite communication antenna 3 is coupled to the satellite communication system 7, and the phase shift module 5 is connected to the satellite communication antenna 3. The switching module 4 is connected to the cellular communication antenna 2, and can couple the cellular communication antenna 2 to the satellite communication system 7.

The satellite communication antenna 3 may be designed based on parameters and features such as a polarization direction and an operating frequency band of one of the cellular communication antennas 2, to ensure that the electronic device 100 can obtain an elliptically polarized satellite communication antenna 1 through reconfiguration. The separately designed satellite communication antenna 3 may be connected to the satellite communication system 7, and does not need to be switched, and only a matched cellular communication antenna 2 needs to be switched by using the switching module 4.

Specifically, as shown in FIG. 5, the cellular communication antenna 2 configured to match the satellite communication antenna 3 may be a diversity receive multiple-input multiple-output antenna (DRX MIMO antenna). The PRX MIMO antenna and the DRX MIMO antenna form the secondary channel for receiving the cellular communication signal. The PRX MIMO antenna is a main link for receiving the cellular communication signal in the secondary channel. The DRX MIMO antenna is mainly configured to cancel impact of fast fading on signal receiving. Therefore, reconfiguring the DRX MIMO antenna can both implement elliptical polarization satellite communication and reduce impact on performance of the PRX MIMO antenna, to ensure cellular communication effect.

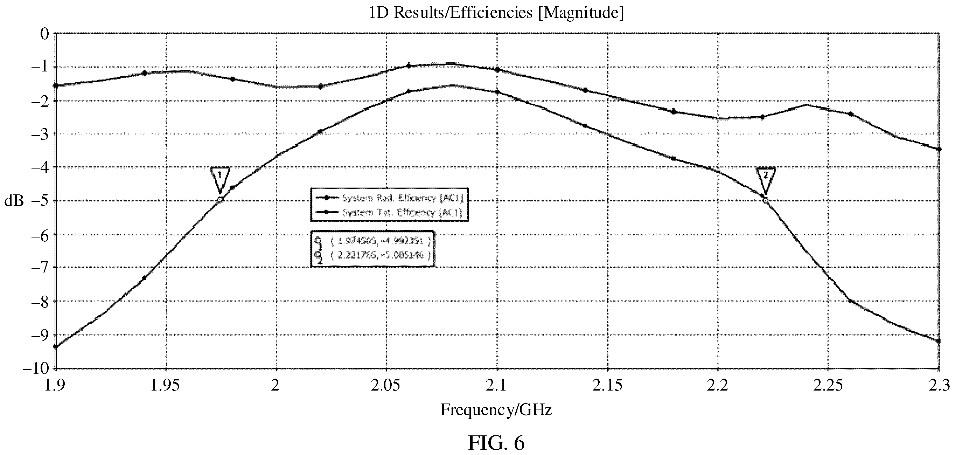

FIG. 6 is a curve diagram of efficiency of an elliptically polarized satellite communication antenna 1. As shown in FIG. 6, in this application, the elliptically polarized satellite communication antenna 1 is formed by reconfiguring cellular communication antennas 2 in an electronic device 100, and total efficiency of the elliptically polarized satellite communication antenna 1 in a frequency band of 1.97 GHz to 2.22 GHz is greater than -5 dB, and initial radiation efficiency of the elliptically polarized satellite communication antenna 1 in a frequency band of 1.92 GHz to 2.19 GHz is greater than -2 dB. Therefore, the elliptically polarized satellite communication antenna 1 has excellent bandwidth characteristics.

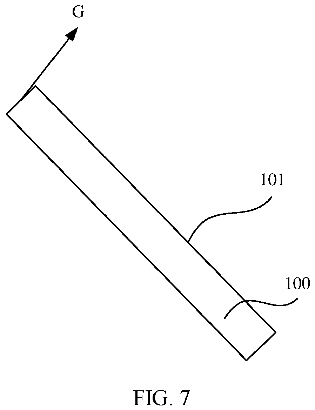

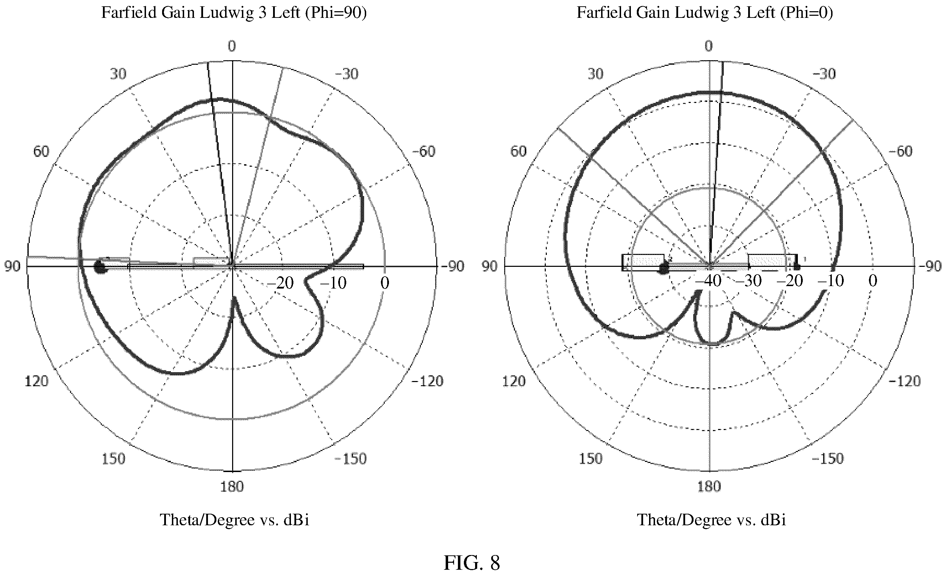

FIG. 7 is a diagram of radiation of the elliptically polarized satellite communication antenna 1 in a common state of the electronic device 100 according to this application. FIG. 8 is a radiation pattern of the elliptical polarized satellite communication antenna 1 in the common state of the electronic device 100 according to this application. As shown in FIG. 7, when a user holds the electronic device 100 for use, the electronic device 100 is usually in a tilted state. For example, an angle of 45° is formed between the electronic device 100 and a horizon. A screen 101 of the electronic device 100 is tilted toward eyes above, and a main radiation direction of the elliptically polarized satellite communication antenna 1 is consistent with an orientation of the screen 101. As shown in FIG. 7 and FIG. 8, in this direction, a radiation gain G of the elliptically polarized satellite communication antenna 1 obtained through reconfiguration in this application is 2.57 dBi, and the elliptically polarized satellite communication antenna 1 has excellent radiation performance.

Specifically, the elliptically polarized satellite communication antenna 1 obtained through reconfiguration in this application can obtain the following characteristics: a left-handed circular gain in a maximum radiation direction is greater than 0 dBi; a bandwidth is from 1.92 GHz to 2.19 GHz; when a gain is 0 dBi and a beam width is greater than 90 degrees, a bandwidth is from 2.04 GHz to 2.06 GHz; when a gain is 0 dBi and a beam width is greater than 80 degrees, a bandwidth is from 2.04 GHz to 2.08 GHz; a maximum left-handed circular gain is 2.57 dBi at a center frequency; and when a left-handed circular gain is greater than 0 dBi, a corresponding angle is -12° to 82°.

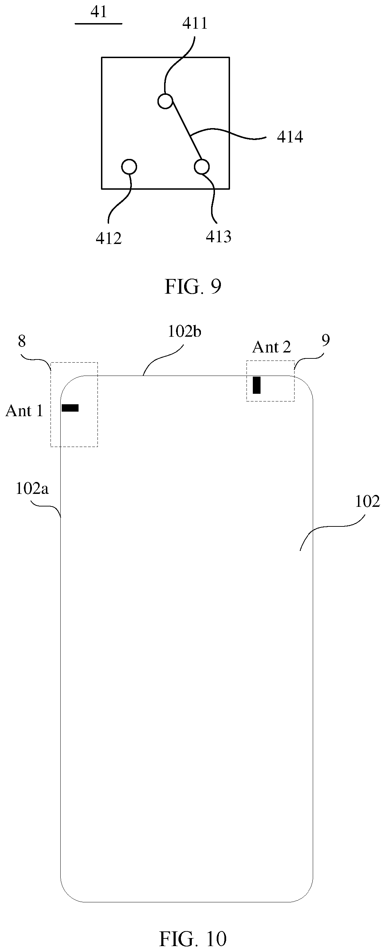

Specifically, as shown in FIG. 9, the switching module 4 may include the switch assembly 41, and the switch assembly 41 includes a first terminal 411, a second terminal 412, a third terminal 413, and a switch 414. The first terminal 411 is configured to connect to the cellular communication antenna 2, the second terminal 412 is configured to connect to the cellular communication system 6, the third terminal 413 is configured to connect to the satellite communication system 7, one end of the switch 414 is connected to the first terminal 411, and the other end of the switch 414 may be selectively connected to one of the second terminal 412 and the third terminal 413. When operating in a cellular communication mode is required, the switch 414 may be connected to the second terminal 412, so that the antenna can be connected to the cellular communication system 6, to implement cellular communication. When operating in a satellite communication mode is required, the switch 414 may be connected to the third terminal 413, so that the antenna can be connected to the satellite communication system 7, to implement satellite communication.

Specifically, the switching module 4 may further include a frequency division circuit, the frequency division circuit is configured to connect to cellular communication antennas 2 that include at least two operating frequency bands, and the frequency division circuit may implement simultaneous operating of the antennas in two frequency bands. In other words, the frequency division circuit may connect a cellular communication antenna 2 operating in a first frequency band to the cellular communication system 6 to perform cellular communication, and connect a cellular communication antenna 2 operating in a second frequency band to the satellite communication system 7 to perform satellite communication after reconfiguration. Therefore, cellular communication and satellite communication may operate simultaneously by using the frequency division circuit.

The two reconfigurable cellular communication antennas 2 may both use the switch assembly 41; or one cellular communication antenna 2 may use the switch assembly 41, and the other cellular communication antenna 2 may use the frequency division circuit; or both cellular communication antennas 2 may use the frequency division circuit.

In a specific implementation, as shown in FIG. 10, the electronic device 100 includes a ground plane 102. The ground plane 102 may be at least a part of any grounding plane, or a grounding plate, or a grounding metal layer, or at least a part of any combination of the grounding plane, or the grounding plate, or a ground component in the electronic device 100 (for example, a mobile phone). The ground plane 102 may be configured to ground a component in the electronic device 100. In an embodiment, the ground plane 102 may be a grounding plane of a circuit board in the electronic device 100, or may be a grounding plate formed by a middle frame of the electronic device 100 or a grounding metal layer formed by a metal film below the screen 101 of the electronic device 100.

Any one of the foregoing grounding plane, the grounding plate, or the grounding metal layer is made of a conductive material. In an embodiment, the conductive material may be any one of the following materials: copper, aluminum, stainless steel, brass and alloys thereof, copper foil on insulation laminates, aluminum foil on insulation laminates, gold foil on insulation laminates, silver-plated copper, silver-plated copper foil on insulation laminates, silver foil on insulation laminates and tin-plated copper, cloth impregnated with graphite powder, graphite-coated laminates, copper-plated laminates, brass-plated laminates and aluminum-plated laminates. A person skilled in the art may understand that the grounding plane/grounding plate/grounding metal layer may alternatively be made of other conductive materials.

As shown in FIG. 10, the ground plane 102 may be in a shape like a rectangle, a square, or a circle. In this embodiment, the ground plane 102 is preferably rectangular, the ground plane 102 includes a long side 102a and a short side 102b, a first antenna 8 is disposed on the long side 102a, and a second antenna 9 is disposed on the short side 102b. A polarization direction of the first antenna 8 may be parallel to an extension direction of the long side 102a, and a polarization direction of the second antenna 9 may be parallel to an extension direction of the short side 102b. Therefore, the polarization directions of the first antenna 8 and the second antenna 9 may be orthogonal, and the first antenna 8 and the second antenna 9 may be combined into an elliptically polarized satellite communication antenna 1 through reconfiguration.

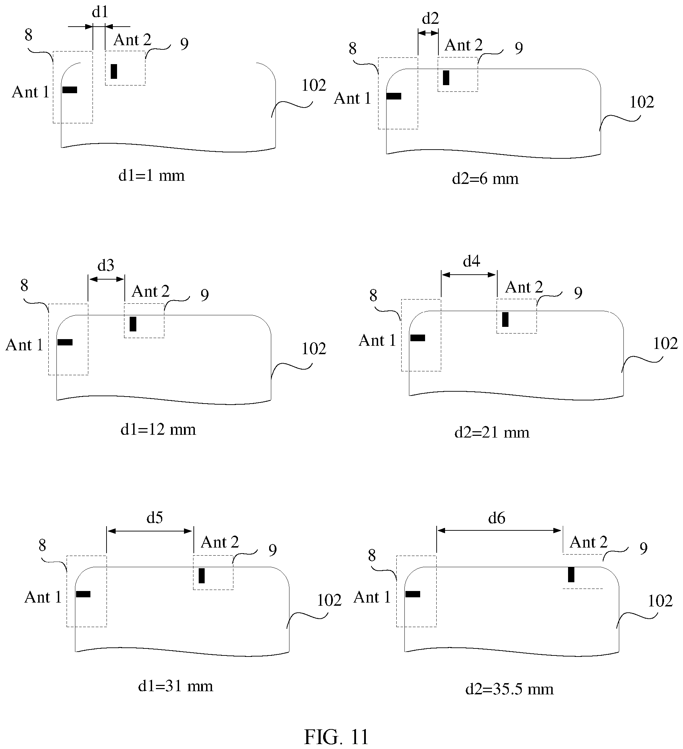

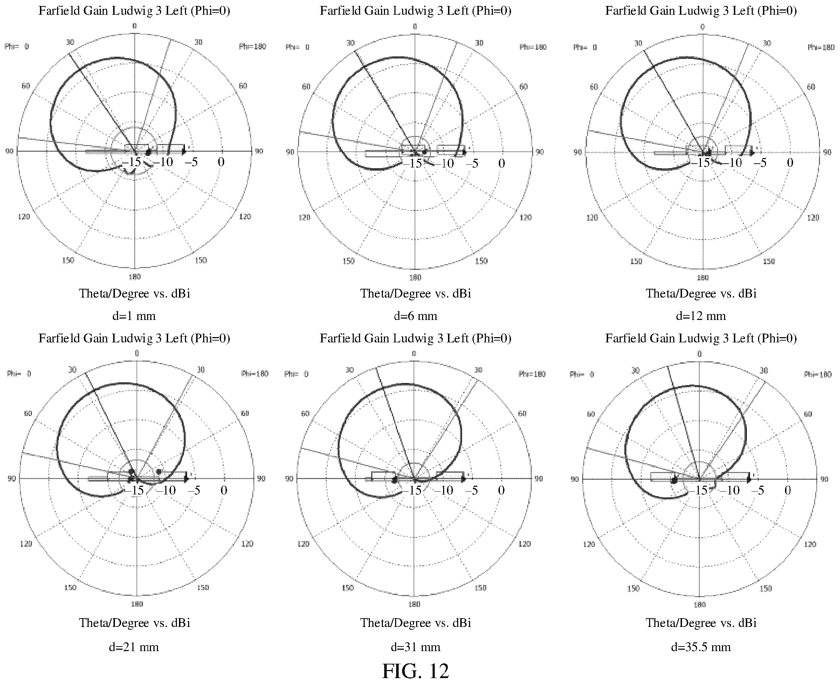

Preferably, the first antenna 8 is located at a location that is on the long side 102a and that is close to the short side 102b on which the second antenna 9 is located, so that polarization components of the first antenna 8 and the second antenna 9 can be balanced, which is conducive to forming the elliptically polarized satellite communication antenna 1 after reconfiguration. FIG. 11 is a diagram of different relative locations of the first antenna 8 and the second antenna 9. As shown in FIG. 11, the second antenna 9 may be disposed at different locations on the short side 102b. For example, an example in which the second antenna 9 is located at a location that is on the short side 102b and that is close to the first antenna 8 is used. When a disposed location of the second antenna 9 changes in a direction away from the first antenna 8, for example, as shown in FIG. 11, distances by which the second antenna 9 changes in the direction away from the first antenna 8 may be d1=1 mm, d2=6 mm, d3=12 mm, d4=21 mm, d5=31 mm, and d6=35.5 mm. FIG. 12 is a radiation pattern of the elliptically polarized satellite communication antenna 1 when the first antenna 8 and the second antenna 9 in FIG. 11 are at different relative locations. As shown in FIG. 11 and FIG. 12, the circular polarization pattern of the elliptically polarized satellite communication antenna 1 formed by reconfiguring the first antenna 8 and the second antenna 9 is deflected at different positions of the second antenna 9. As shown in FIG. 12, a circular polarization characteristic of the elliptical polarized satellite communication antenna 1 can be ensured.

Both the first antenna 8 and the second antenna 9 may be the cellular communication antenna 2, and the first antenna 8 and the second antenna 9 may be reconfigured by using the switching module 4, the phase shift module 5, and the like, to be integrated into the elliptically polarized satellite communication antenna 1. The first antenna 8 and the second antenna 9 may be antennas using metal frames, or may be antennas implemented by using another process, for example, an injection molding metal, an FPC, or an LDS process. In addition, the first antenna 8 may be the cellular communication antenna 2, and the second antenna 9 may be the satellite communication antenna 3 that is separately designed based on parameters such as a polarization direction and an operating frequency band of the first antenna 8. After being reconfigured by using the switching module 4, the phase shift module 5, and the like, the first antenna 8 and the second antenna 9 may be combined into the elliptically polarized satellite communication antenna 1.

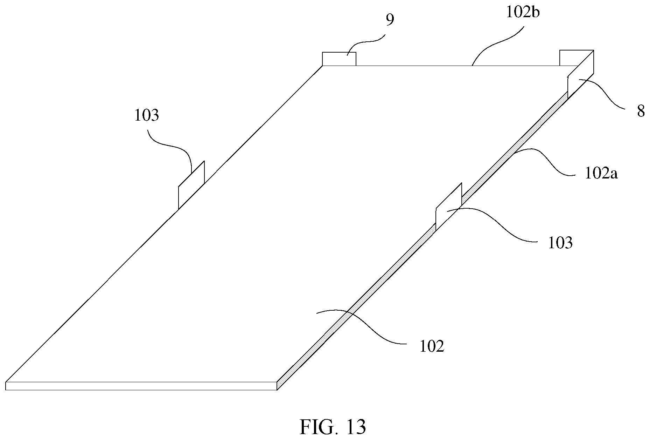

In a specific implementation, as shown in FIG. 13, a choke structure 103 may be disposed on the long side 102a of the ground plane 102, and a distance between the choke structure 103 and the short side 102b on which the second antenna 9 is located is basically equal to a length of the short side 102b.

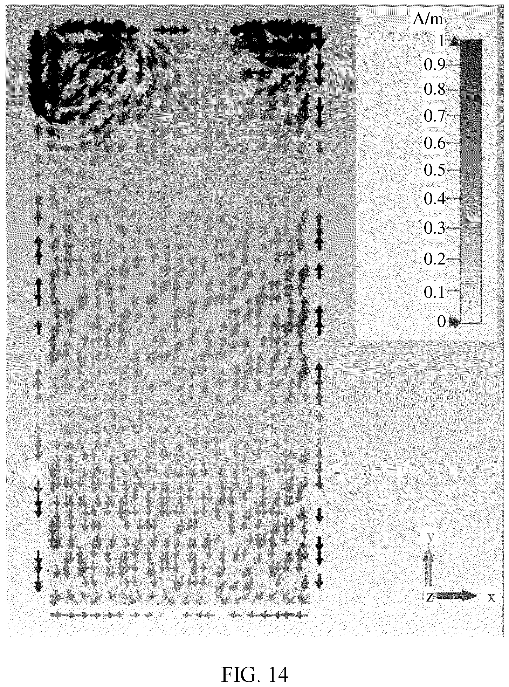

FIG. 14 is a diagram of distribution of currents on the ground plane 102 on which no choke structure 103 is disposed. As shown in FIG. 14, when there is no choke structure 103, currents of the ground plane 102 are dispersed from one end to the other end along the long side 102a of the ground plane 102, and it is difficult to concentrate the currents at a location of the antenna, and optimal performance of the antenna cannot be achieved.

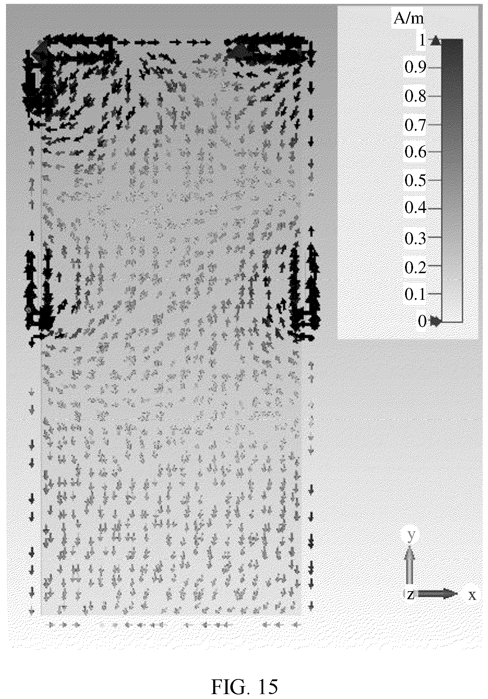

In this embodiment, FIG. 15 is a diagram of distribution of currents on the ground plane 102 on which the choke structure 103 is disposed. As shown in FIG. 15, the choke structure 103 is disposed on the long side 102a, and the choke structure 103 may reflect a current transferred from the first antenna 8, to suppress current dispersion. In other words, the choke structure 103 may enable currents to be more concentrated at a location of the antenna, improve circular polarization characteristics of the first antenna 8 and the second antenna 9, and improve an antenna gain.

Specifically, a distance between the choke structure 103 and the short side 102b on which the second antenna 9 is located is equal to a length of the short side 102b. One choke structure 103 is disposed on each of two long sides 102a, and the distance between the choke structure 103 and the short side 102b is equal to the length of the short side 102b, so that a square area can be formed between the choke structure 103 and the short side 102b, and the currents can form current intensity points at two ends of the short side 102b and two ends of the choke structure 103. In other words, the currents can be more concentrated at locations of the first antenna 8 and the second antenna 9, so that a circular polarization characteristic of the elliptically polarized satellite communication antenna 1 formed by reconfiguring the first antenna 8 and the second antenna 9 is improved, and an antenna gain is improved.

Specifically, the choke structure 103 may be a metal stub. The metal stub is disposed on a path where the currents are dispersed along the long side 102a of the ground plane 102, to reflect the currents.

The foregoing describes merely preferred embodiments of this application, which are not intended to limit this application. For a person skilled in the art, various modifications and changes may be made in this application. Any modification, equivalent replacement, or improvement made without departing from the spirit and principle of this application shall fall within the protection scope of this application.

## Claims

1. An electronic device, comprising:
a first antenna;
a second antenna; and
a switching module, wherein the switching module is electrically connected to at least one of the first antenna and the second antenna, to enable the first antenna and the second antenna to be coupled to a satellite communication system, to enable the first antenna and the second antenna to be combined into a third antenna.

2. The electronic device according to claim 1, wherein the electronic device further comprises a phase shift module coupled to at least one of the first antenna and the second antenna.

3. The electronic device according to claim 1, wherein the first antenna and the second antenna are cellular communication antennas operating in a cellular communication frequency band, and the switching module is electrically connected to the first antenna and the second antenna.

4. The electronic device according to claim 3, wherein the first antenna and the second antenna are both multiple-input multiple-output antennas.

5. The electronic device according to claim 4, wherein the multiple-input multiple-output antenna comprises at least a primary receive antenna, a diversity receive antenna, a primary receive multiple-input multiple-output antenna, and a diversity receive multiple-input multiple-output antenna;
the primary receive antenna and the diversity receive antenna form a primary channel for receiving a cellular communication signal, and the primary receive multiple-input multiple-output antenna and the diversity receive multiple-input multiple-output antenna form a secondary channel for receiving a cellular communication signal; and
the switching module is separately connected to the primary receive multiple-input multiple-output antenna and the diversity receive multiple-input multiple-output antenna, and is configured to enable the primary receive multiple-input multiple-output antenna and the diversity receive multiple-input multiple-output antenna to switch between a cellular communication system and the satellite communication system.

6. The electronic device according to claim 2, wherein one of the first antenna and the second antenna is a cellular communication antenna operating in a cellular communication frequency band, and the other of the first antenna and the second antenna is a satellite communication antenna operating in a satellite communication frequency band;
the satellite communication antenna is coupled to the satellite communication system;
the phase shift module is connected to the satellite communication antenna; and
the switching module is connected to the cellular communication antenna.

7. The electronic device according to claim 6, wherein the cellular communication antenna is a diversity receive multiple-input multiple-output antenna.

8. The electronic device according to any one of claims 3 to 7, wherein the switching module comprises a switch assembly, the switch assembly comprises a first terminal, a second terminal, a third terminal, and a switch, the first terminal is configured to connect to the cellular communication antenna, the second terminal is configured to connect to the cellular communication system, and the third terminal is configured to connect to the satellite communication system; and
one end of the switch is connected to the first terminal, and the other end of the switch is selectively connected to one of the second terminal and the third terminal.

9. The electronic device according to any one of claims 3 to 8, wherein the switching module further comprises a frequency division circuit, and the frequency division circuit is configured to connect to cellular communication antennas that comprise at least two operating frequency bands;
the frequency division circuit is configured to connect a cellular communication antenna operating in a first frequency band to the cellular communication system; and
the frequency division circuit is further configured to connect a cellular communication antenna operating in a second frequency band to the satellite communication system.

10. The electronic device according to any one of claims 2 to 9, wherein the phase shift module comprises a phase shifter or a phase shift circuit.

11. The electronic device according to any one of claims 1 to 10, wherein the electronic device comprises a ground plane, the ground plane comprises a long side and a short side, the first antenna is disposed on the long side, and the second antenna is disposed on the short side.

12. The electronic device according to claim 11, wherein a choke structure is disposed on the long side.

13. The electronic device according to claim 12, wherein a distance between the choke structure and the short side on which the second antenna is located is equal to a length of the short side.

14. The electronic device according to claim 12 or 13, wherein the choke structure is a metal stub.

15. The electronic device according to any one of claims 1 to 14, wherein the third antenna is an elliptically polarized satellite communication antenna.
